Europäisches Patentamt

European Patent Office

Office européen des brevets

(11) Veröffentlichungsnummer: **0 251 196 B1**

# EUROPÄISCHE PATENTSCHRIFT

(45) Veröffentlichungstag der Patentschrift: **02.12.92**

(21) Anmeldenummer: **87109115.3**

(22) Anmeldetag: **24.06.87**

(51) Int. Cl.⁵: **F24F 6/14**, F24F 3/14

(54) **Luftwäscher zur Befeuchtung und Temperierung von Luft in Klimaanlagen odgl.**

(30) Priorität: **25.06.86 DE 3621314**

(43) Veröffentlichungstag der Anmeldung:
**07.01.88 Patentblatt 88/01**

(45) Bekanntmachung des Hinweises auf die
Patenterteilung:
**02.12.92 Patentblatt 92/49**

(84) Benannte Vertragsstaaten:
**AT CH DE ES FR GB IT LI NL SE**

(56) Entgegenhaltungen:
**EP-A- 0 177 006**      **DE-A- 2 531 076**
**DE-B- 2 325 120**      **DE-B- 2 325 120**
**DE-C- 502 828**         **FR-A- 591 071**

**PATENT ABSTRACTS OF JAPAN** Band 6, Nr.
**201 (M-163)(1079) 13. October 1982; JP-A-57
108 509**

(73) Patentinhaber: **Kiesel, Vera**
**Matterstockstrasse 26-28**
**W-8700 Würzburg(DE)**

(72) Erfinder: **Kiesel, Karl-Heinz**
**Matterstockstrasse 26-28**
**W-8700 Würzburg(DE)**

(74) Vertreter: **Pöhner, Wilfried Anton, Dr.**
**Kaiserstrasse 27 Postfach 63 23**
**W-8700 Würzburg 1(DE)**

## Beschreibung

Die Erfindung bezieht sich auf einen Wäscher zur Befeuchtung und Temperierung von Luft in Klimaanlagen odgl., bei dem in einem von der zu behandelnden Luft durchströmten Gehäuse Düsen zum Versprühen von Flüssigkeit angeordnet sind.

Luftwäscher, häufig auch Sprühbefeuchter oder Düsenkammer genannt, sind allgemein bekannt und sie bringen die durchströmende Luft in direkte Berührung mit einer in aller Regel aus Wasser bestehenden Flüssigkeit. Bei Zerstäubung erhält man sowohl eine Stoff- als auch eine Wärmeübertragung, da je nach der Temperatur des Wassers Änderungen des Luftzustandes möglich sind und neben der Befeuchtung auch eine Erwärmung oder Kühlung erfolgen kann. Eingesetzt werden Luftwäscher am häufigsten in Klimaanlagen, wobei die adiabate Zustandsänderung im Sinne einer Befeuchtung und Abkühlung der durchströmenden Luft die größte Bedeutung besitzt. Entgegen der Bezeichnung findet ein Waschen oder Reinigen der Luft nur für grobe Staubteilchen oder gewisse Gase statt.

Grundsätzlich lassen sich die Luftwäscher in zwei Bauarten, nämlich die Düsenbefeuchter und die Oberflächenbefeuchter, unterscheiden. Bei den Düsenbefeuchtern wird die in aller Regel aus Wasser bestehende Flüssigkeit zu einem Nebel zerstäubt, durch den die Luft hindurch gefördert wird. Durch die über den Durchlaßquerschnitt punktuell verteilte Düsen ergibt sich ein inhomogener Sprühnebel, so daß die durchströmende Luft, in ihrem Bestreben den Weg des geringsten Widerstandes zu gehen, gerade dort passieren wird, wo der Flüssigkeitsnebel nur sehr schwach oder überhaupt nicht vorhanden ist, so daß die aufgenommene Flüssigkeitsmenge nur sehr gering und der Wirkungsgrad schlecht ist.

Aus der DE-B-23 25 120 ist ein Dampfluftbefeuchter bekannt, der an die vorbeiströmende Luft vermittels Düsen Dampf abgibt, die ihrerseits durch ein Venturirohr umgeben sind. Die Abgabe von Dampf bewirkt neben einer Befeuchtung eine für die Sommermonate nachteilige Erwärmung der Luft. Das umgebende Venturirohr hat einzig den Sinn, einen Unterdruck zu erzeugen, um den Dampfaustritt zu erleichtern.

Aus der FR-A-591 071 ist bekannt, zum Versprühen von Flüssigkeiten, insbesondere Parfums ein Gehäuse von außen mit Luft zu beaufschlagen, das sich verjüngt und bei dem im Bereich engsten Querschnitts über Unterdruck die Flüssigkeit angesaugt und in den Luftstrom versprüht wird.

Hiervon ausgehend hat sich die Erfindung die Weiterentwicklung derartiger Luftwäscher dahingehend zur Aufgabe gemacht, daß deren Wirkungsgrad erhöht und ein wirtschaftliches Arbeiten möglich gemacht wird.

Gelöst wird diese Aufgabe erfindungsgemäß dadurch, daß wenigstens eine Düse von einer Leitvorrichtung umgeben ist, die als Umhüllende entsprechend der durch den kegelförmigen Austritt, der durchströmenden Luft und der Schwerkraft bestimmten Bahn der aus der Düse austretenden Flüssigkeite und im Bezug auf die Symmetrieachse der Düse unsymmetrisch und nach unten zu geformt ist, die Tropfen der Flüssigkeit in ihrer Größe so eingestellt sind, daß sie den Luftwäscher nicht verlassen und sich ein Drallkörper im Bereich des Lufteinlasses der Leitvorrichtung befindet, der vorzugsweise entgegengesetzt dem Drall der Düse gerichtet ist.

Der Kern der Erfindung besteht demnach in der Anordnung einer Leitvorrichtung um jede Düse. Das Material ist grundsätzlich beliebig, so daß es sich beispielsweise um Blech handeln könnte.

Entscheidend ist die Form, die durch die Bahn der aus der Düse austretenden Flüssigkeitspartikel bestimmt wird. Diese wird beeinflußt zum einen durch die Anfangsgeschwindigkeit der etwa in Form eines Kegels aus der Düse austretenden Flüssigkeitspartikel, des weiteren durch die die Bahn nach unten zu krümmende Einwirkung der Schwerkraft sowie schließlich durch Impulsübertragung der im Bereich der Düse strömenden Luft, welche die Bahn der Flüssigkeitspartikel in Strömungsrichtung verändert. Als Ergebnis erhält man bei Einsprühen der Flüssigkeit in Bewegungsrichtung der durchströmenden Luft einen Körper etwa von der Form eines Paraboloids, in dessen Scheitel sich die Düse befindet. Wird jedoch Flüssigkeit entgegen der Bewegungsrichtung der Luft versprüht, was im späteren noch näher erläutert werden wird, dann erfahren die Flüssigkeitspartikel bei entsprechender Einstellung eine Umkehrung der Bewegung in Strömungsrichtung der Luft. Die Bewegungsbahnen unterscheiden sich dann grundlegend von dem vorbeschriebenen, durch die Einspritzung in Bewegungsrichtung gekennzeichneten Fall. Die Leitvorrichtung ist nun so gewählt, daß sie die Bewegungsbahn als Umhüllende umgibt, selbstverständlich jedoch im Bereich der durch diese definierten Mittelachse eine Öffnung für den Einlaß der durchströmenden Luft freiläßt und sich dann entsprechend der Bahn der Flüssigkeitspartikel in Bewegungsrichtung der Luft verbreitert.

Der Luftwäscher wird auf gleichbleibenden Betriebszustand eingestellt, d.h. auf eine konstante Austrittsgeschwindigkeit der Flüssigkeit sowie eine im wesentlichen gleichbleibende Geschwindigkeit der durchstörmenden Luft, mit der Folge, daß die austretenden Flüssigkeitspartikel stets eine bestimmte Bahn beschreiben und demzufolge die Form der Leitvorrichtung auf eindeutige Weise definieren.

Funktion und Wirkungsweise der anzubringenden Leitvorrichtung ist wie folgt: Die einströmende Luft tritt über einen vergleichsweise engen Querschnitt in die Leitvorrichtung, die sich nach außen zu verbreitert.

Nach der Kontinuitätsbedingung bedeutet dies eine Verlangsamung der Luft innerhalb der Leitvorrichtung, in der sich der Flüssigkeitsnebel befindet. Hierdurch wird bewirkt, daß die Relativgeschwindigkeit zwischen der durchströmenden Luft und der austretenden Flüssigkeit noch länger beibehalten wird, was insbesondere dem Austausch und der Aufnahme der Flüssigkeit förderlich ist. Zur Erzielung eines guten Resultates kommt es insbesondere darauf an, die unterschiedlichen Geschwindigkeiten von Luft und Flüssigkeiten möglichst lange beizubehalten und die beiderseitige Angleichung hinauszuzögern.

Ein anderer Grund der Verbesserung des Stoffaustausches besteht in der Tatsache, daß die durchströmende Luft großteils durch die Leitvorrichtung und den in ihr befindlichen Flüssigkeitsnebel gezwungen wird und nicht, wie beim Stande der Technik, den Bereichen mit Flüssigkeitspartikeln ausweichen kann.

Als Resultat ergibt sich eine wesentliche Verbesserung des Stoffaustausches, der gleichzeitig eine Reduzierung der Flüssigkeitsmengen der Düsen erlaubt. Dies findet ihren Niederschlag in der Wasser/Luft-Zahl wieder, welche sich im Stande der Technik im Bereich zwischen 1 und 0,4, bei den erfindungsgemäßen Vorrichtungen jedoch bei 0,2 bewegt.

Ein weiterer entscheidender Kern der Erfindung besteht darin, die Größe der aus der Düse austretenden Tropfen so zu wählen, daß sie den Luftwäscher nicht verlassen können. Die Einstellung der Tropfengröße hängt von unterschiedlichen Faktoren ab, so z.B. dem Durchmesser der Düsenbohrungen sowie dem beaufschlagten Druck, in dem Sinne, daß bei geringem Druck große Tropfen erzeugt werden. Im Stande der Technik wird versucht, eine Maximalmenge an Wasser zu zerstäuben und an die Luft abzugeben, die dann in Tropfenform durch den Luftstrom mitgeführt wird, in die zu klimatisierenden Räume gelangt, sich niederschlägt und zu unerwünschten Ablagerungen von Sedimenten führt. Genau diesen Nachteil versucht die Erfindung mit Sicherheit oder doch zumindest weitestgehend auszuschließen, in dem der Luftstrom nur verdampfte Flüssigkeit aufnimmt und den nichtverdampften Rest von mitunter minimalem Durchmesser am Verlassen des Luftwäschers hindert. Gemäß dem Vorschlag der Erfindung wird dieses Ziel dadurch erreicht, daß die Größe der aus der Düse austretenden Tropfen zumindest überwiegend so groß gewählt werden, daß sie unter dem Einfluß der Schwerkraft sich bogenförmig innerhalb des Luftwäschers nach unten zu bewegen und noch innerhalb der Anordnung den Luftstrom verlassen.

Eine andere, kleinere Tropfendurchmesser erlaubende Lösung besteht darin, einen endseitigen Tropfenabscheider in den Luftwäscher anzuordnen, durch den auch noch die im Luftstrom mitgeführten Tropfen entfernt werden können. Voraussetzung für das Abscheiden der Flüssigkeit ist allerdings auch hier, daß der Tropfendurchmesser mit Erreichen des Abscheiders einen gewissen Mindestdurchmesser aufweist.

Ein weiterer entscheidender Kern der Erfindung besteht darin, daß ein Drallkörper im Bereich des Lufteinlasses der Leitvorrichtung angebracht wird, der Trubulenzen und damit eine bessere Durchmischung und Aufnahme von Feuchtigkeit zur Folge hat. Der Drallkörper kann beispielsweise die Form eines feststehenden Ventilators, Propellers oder dgl. besitzen. Bei der möglichen Verwendung einer Exeterdüse besitzt die austretende Flüssigkeit einen Drall. Dann empfiehlt die Erfindung zur besseren Vermischung und Verwirbelung die Orientierung des Drallkörpers der der Düse entgegengesetzt zu richten.

Neben dem entscheidenden Vorteil der Befeuchtung der Luft durch Verdampfen und nicht durch Zerstäuben bestehen weitere Vorteile darin, daß durch den vergleichsweise geringen Druck die Geschwindigkeit der austretenden Flüssigkeit, z.B. Wasser gering ist und die Aufnahmefähigkeit umso höher ist, je größer die Differenz zwischen Luft- und Wassergeschwindigkeit ist. Als Vorzug ist weiter anzusehen, daß geringe Pumpenleistungen ausreichen.

Entscheidendes Ziel der Erfindung ist, dem Luftstrom möglichst viel Wasser in Dampfform mitzugeben, ein Mitführen von Flüssigkeitstropfen jedoch zu verhindern. Im Sinne der Schaffung einer großen Oberfläche und zur Förderung der Verdampfung wäre es an sich erstrebenswert eine möglichst große Oberfläche zu schaffen, die Tropfen also klein zu wählen, was allerdings den Nachteil hätte, daß die Tropfen im Luftstrom mitgeführt werden würden. Zur Vermeidung dieses unerwünschten Nachteiles und zur Verdampfung einer maximalen Menge an Flüssigkeit sind die Leitvorrichtungen entsprechend der Erfindung vorgesehen.

Grundsätzlich kann die Leitvorrichtung in einer oder zwei Ebenen die Düse umgeben, wobei mehrere nebeneinander liegende Düsen durch Einlegen von ein oder zwei entsprechend geformten Bleche abgedeckt werden können. Der Fall der ringförmigen Anordnung hat ein wesentlich besseres Ergebnis zur Folge.

In einer Weiterbildung ist vorgesehen, im Bereich des Lufteintrittes an der Leitvorrichtung einen Trichter anzubringen, der die anströmende Luft wenigstens teilweise in die Leitvorrichtung führt. Es sind grundsätzlich zwei Fälle denkbar, zum einen den, daß die gesamte, im Querschnitt der Leitvorrichtung auftreffende Luft erfaßt und in diese geführt wird, aber auch der andere Fall, daß dies nur teilweise geschieht und die übrige Luft an der Leitvorrichtung unerfaßt vorbeiströmt. Die Trichterform des Lufteintritts hat in erster Linie eine Verbesserung der Strömungsverhältnisse zur Folge.

Wird nur ein Teil der einströmenden Luft durch die Leitvorrichtung erfaßt, empfiehlt es sich, den restlichen Anteil on dieser vorbei und am Luftaustritt wieder zuzuführen. Dort entstellt in vorteilhafter Weise eine zusätzliche Verwirbelung und folglich eine Verbesserung des Stoffaustausches.

Wie eingangs bereite erwähnt, kann die Düse sowohl in als auch entgegen der Strömungsrichtung der Luft arbeiten, wobei die Bewegungsbahn der Partikel dann völlig verschieden ist. Das Aussprühen der Düse entgegen der Strömungsrichtung hat zum Vorteil, daß aufgrund gegenläufiger Bewegungsrichtungen die Bahn der Flüssigkeitspartikel umgelenkt, dadurch die Aufenthaltedauer erhöht und die Zeit der Relativgeschwindigkeit ungleich Null verlängert wird. Das Ergebnis ist eine weitere Verbesserung des Wirkungsgrades.

In entsprechendem Sinne wirkt die Anordnung eines Drallkörpers im Bereich des Lufteinlasses der Leitvorrichtung, der Turbulenzen und damit eine bessere Durchmischung und Aufnahme von Feuchtigkeit zur Folge hat. Der Drallkörper kann beispielsweise die Form eines feststehenden Ventilators, Propellers odgl. besitzen. Bei der möglichen Verwendung einer Exzenterdüse besitzt die austretende Flüssigkeit einen Drall. Dann empfiehlt die Erfindung zur besseren Vermischung und Verwirbelung die Orientierung des Drallkörpers der der Düse entgegengesetzt zu richten.

Die Flüssigkeitsgeschwindigkeit beträgt beim Austritt aus der Düse etwa des 10-fache der Luft, wird mit zunehmendem Abstand jedoch rasch angeglichen. Die Flüssigkeitsaufnahme der Luft ist umso höher, je größer die Differenzgeschwindigkeit zwischen Luft und Flüssigkeit ist. Aus diesem Grunde ist von Vorteil, die Leitvorrichtung am düsenfernen Ende randseitig zu verjüngen, was eine nochmalige Beschleunigung des inneren, Feuchtigkeit führenden Luftstromes und ein zusätzliches Ansaugen von außerhalb der Leitvorrichtung vorbeiströmender Luft mit sich bringt.

In einer vorteilhaften Weiterbildung sind im Bereich des Lufteinlasses der Leitvorrichtung Leitbleche angebracht, die vor allem bei saugseitiger Strömung, also bei Betrieb mit Unterdruck, die dann besonders erforderliche Optimierung der Luftverteilung unterstützen und fördern können. Werden diese Leitbleche außerdem verschwenkbar gelagert und in ihren Abmessungen entsprechend gewählt, können sie zum Verschliessen und damit Stillegen der zugehörigen Leitvorrichtung eingesetzt werden.

Vor allen Dingen bei Anbringung mehrerer Leitvorrichtungen neben- und/oder übereinander, verteilt über den Querschnitt des Gehäuses, läßt sich durch Verschließen von ein oder mehreren Leitvorrichtungen der durch ein Gebläse eingestellte, regulier- und veränderbare Luftdurchsatz der Gesamtanlage eine Anpassung erreichen, wobei dann in vorteilhafter Weise die Luftgeschwindigkeit innerhalb der dann noch offenen Leitvorrichtungen im wesentlichen konstant gehalten bleibt. Die Verminderung der Befeuchtungsleistung entspricht dann ziemlich genau dem Anteil, der den verschloßenen Leitvorrichtungen querschnittsmäßig entspricht. Würde man hingegen, wie im Stande der Technik, die Befeuchtungsleistung durch Abschalten einiger Düsen vermindern, könnte man nicht eine Reduzierung entsprechend dem Quotient aus Zahl der abgeschalteten Düsen zur Gesamtzahl der Düsen erreichen, da sich die abgegebenen Flüssigkeitstropfen der anderen Düsen auch im Querschnitt der abgeschalteten Düsen ausbreiten werden.

Schließlich ist noch von Vorteil, die Düsen schwenkbar zu befestigen, so daß der Zerstäubungskegel der Flüssigkeit in Abhängigkeit vom Verdrehungswinkel mehr oder weniger aus dem Luftstrom herausgedreht wird, so daß ein gewisser Anteil der durchströmenden Luft nicht mehr mit den Flüssigkeitstropfen in Kontakt treten kann, so daß die Befeuchtungsleistung ebenfalls vermindert wird. Auf diesem Wege ist eine kontinuierliche Beeinflussung und Steuerung der Befeuchtungsleistung möglich.

Unabhängig von vorgeschildertem Typ läßt sich für alle Luftwäscher unterhalb der Düsen eine Sammelwanne anordnen, die mit der die Düse beaufschlagenden Pumpe in Verbindung steht und die des weiteren an die Frischwasserleitung angeschlossen ist. In der Sammelwanne ist ein Ventil angeordnet, welches bei Abschalten des Gerätes, genauer der Befeuchtungsleistung, geöffnet und hierdurch der Inhalt der Wanne abgelassen wird. Die Funktion ist wie folgt: Mit Einschalten bei Beginnen der Befeuchtung ist die Sammelwanne leer, so daß einzig und allein Frischwasser zugeführt wird. Nach dem Versprühen wird der nicht durch die Luft aufgenommene Teil in der zunächst leeren Wanne gesammelt und von dort wieder der Pumpe zugeleitet. Dadurch vemindert sich die der Frischwasserleitung zu entnehmende Flüssigkeitsmenge um den aus der Wanne entnommenen Anteil (Sekundärwassermenge). Die versprühte Flüssigkeitsmenge setzt sich damit zusammen aus eines Frischwasser- und einem Sekundärwasseranteil, so daß das gesamte System als Mischwasserbetrieb zu bezeichnen ist. Ein entscheidender Vorteil besteht darin, daß außerhalb der Betriebazeiten die Wanne völlig leer und ohne Wasserstand ist, so daß sich wesentlich weniger Mikroorganismen bilden können als in einem Luftwäscher, in dessen Sammelwanne ständig und auch außerhalb der Betriebzeiten Wasser steht, so daß sich besonders leicht, insbesondere auch weil häufig relativ hohe Temperaturen gegeben sind, Mikroorganismen bilden können. Hierin ist ein entscheidender hygienischer Nachteil zu sehen. Zwar wäre es grundsätzlich auch denkbar, diese hygienischen Vorteile durch einen Betrieb mit reinem Frischwasser zu realisieren, was jedoch eine unökonomische Lösung wäre, da die dann benötigte Wassermenge beträchtlich wäre. Hingegen benötigt die erfindungsgemäße Lösung ein Minimum an Flüssigkeit, nämlich kann mehr als durch die durchströmende Luft aufgenommen und abtransportiert wird. Die darüber geringfügig hinausgehende Menge dient dem Ausspülen und dem Abtransport der zurückbleibenden und sich absetzenden Salze und anderer Sedimente.

Ebenfalls aus hygienischen Gründen und zur leichten und schnellen Desinfektion des Luftwäscherinnenraumes ist in einer Weiterbildung ein nach innen führender und von außen zugänglicher Dampfrohranschluß vorgesehen. Während einer Betriebspouse läßt sich dann auf elegante Weise der Luftwäscher desinfizieren und Keime und Mikroorganismen abtöten, in dem von außen eine Dampfquelle angeschlossen und der Innenraum mit Dampf beaufschlagt wird. Bakterien und Keime sind dann mit Sicherheit beseitigt. Der bislang übliche innenräumige Einsatz keimabtötender chemischer Lösungen erübrigt sich dann.

Weitere Einzelheiten, Merkmale und Vorteile der Erfindung lassen sich dem nachfolgenden Beschreibungsteil entnehmen, in dem anhand der Zeichnung Ausführungsbeispiele der Erfindung beschrieben werden. Es zeigen in prinzipienhafter Darstellung:

Figur 1: eine einzige Leitvorrichtung in Querschnittsdarstellung

Figur 2: mehrere Leitvorrichtungen, über die gesamte Höhe des Gehäuses angeordnet.

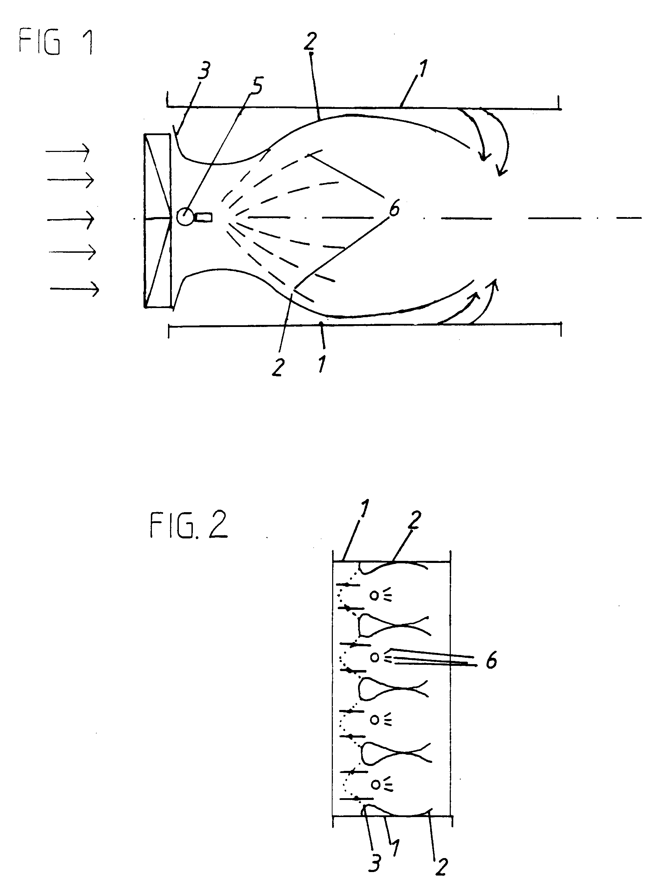

In Figur 1 ist innerhalb des Gehäuses 1 die Leitvorrichtung 2 angeordnet. Sie ist einlaßseitig als Trichter 3 geformt und auslaßseitig etwa von der Gestalt eines Rotationsparaboloids. Einlaßseitig ist der Trichter 3 durch einen die Verwirbelung der einströmenden Luft verbessernden Drallkörper 4 verschloßen. Unmittelbar hinter diesem ist in der Mitte die Düse 5 angeordnet, welche die Flüssigkeit in Strömungsrichtung in die Leitvorrichtung 2 versprüht. Sie ist verschwenkbar befestigt, so daß es möglich wird, in Abhängigkeit vom Drehwinkel einen mehr oder weniger großen Anteil der durchströmenden Luft mit Feuchtigkeit zu beaufschlagen.

Auf diese Weise ist eine kontinuierliche Regelung der Befeuchtungsleistung möglich. Die Bahnen 6 der aus der Düse 5 austretenden Flüssigkeitspartikel sind gestrichelt eingezeichnet und sollen verdeutlichen, daß die Form der Leitvorrichtung 2, abgesehen vom Einlaßbereich, die Umhüllende der Bahnen 6 der Flüssigkeitspartikel darstellt. Eingangsseitig ist in Pfeilen die Bewegung der auftreffenden und zu befeuchtenden Luftpartikel durch Pfeile dargestellt. Hieraus folgt, daß die auftreffende Luft den Drallkörper 4 passiert, von dort in den Trichter 3 einmündet und in die Leitvorrichtung 2 eingelassen wird. Wie ebenfalls durch Pfeile angedeutet, gelangt ein geringer Anteil der auftreffenden Luft nicht ins Innere der Leitvorrichtung 2, sondern wird an dieser vorbei und entlang der Innenseite des Gehäuses 1 geleitet, um am Auslaß der Leitvorrichtung 2 wieder einzuströmen, zusätzliche Verwirbelungen zu erzeugen und folglich die Durchmischung und Stoffübertragung zu verbessern. Selbstverständlich wäre auch der hier nicht gezeigte Fall denkbar, daß die Leitvorrichtung 2 einschließlich Trichter 3 unmittelbar am Gehäuse 1 anliegt.

In Figur 2 sind mehrere der soeben beschriebenen Leitvorrichtungen 2 mit Trichter 3 und Düsen 5 sowie angedeuteten Bahnen 6 übereinander angeordnet. Der entscheidende Unterschied besteht zum einen darin, daß über die gesamte Hohe des Gehäuses 1 insgesamt vier Leitvorrichtungen befestigt sind und hierdurch zumindest in der Höhe der gesamte Querschnitt abgedeckt ist. Zum anderen sind im Bereich des Einlasses der Leitvorrichtung 2, ebenfalls in Abweichung von Figur 1, keine Drallkörper 4, sondern Leitbleche 7 verschwenkbar angeordnet, die in Öffnungsstellung und damit in Durchlaßrichtung gezeigt sind. Die punktierte Linie deutet die Stellung der Leitbleche 7 bei geschlossenem Zustand an, in dem eine oder mehrere der Leitvorrichtungen 2 versperrt sind. Hierdurch wird möglich, die Leistung des Luftwäschers stufenweise entsprechend zu mindern und zwar jeweils um einen Anteil, der bestimmt wird durch den Anteil der durch die Leitbleche 7 verschlossenen Querschnittsfläche in Bezug auf den gesamten angeströmten Querschnitt. Grundsätzlich wäre denkbar, die Leitvorrichtungen zuweilen nicht nur übereinander sondern euch nebeneinander, d. h. senkrecht zur Zeichenebene anzuordnen. Neben der Möglichkeit der stufenweisen Regelung der Befeuchtungsleistung bieten die Leitbleche 7 darüber hinaus die Möglichkeit der besseren Führung und Leitung der Luft.

Im Ergebnis erhält man durch den erfindungsgemäßen Vorschlag einen Luftwäscher, dessen Wirkungsgrad gegenüber den aus dem Stande der Technik bekannten wesentlich erhöht ist und andererseits ein Minimum an Wasser benötigt, so daß ein wirtschaftliches Befeuchten und Temperieren von Luft in Klimaanlagen odgl. möglich wird,

**Patentansprüche**

1. Luftwäscher zur Befeuchtung und Temperierung von Luft in Klimaanlagen odgl., bei dem in einem von der zu behandelnden Luft durchströmten Gehäuse (1) Düsen (5) zum Versprühen von Flüssigkeit angeordnet sind, **dadurch gekennzeichnet,** daß wenigstens eine Düse (5) von einer Leitvorrichtung (2) umgeben ist, die als Umhüllende entsprechend der durch den kegelförmigen Austritt, der durchströmenden Luft und der Schwerkraft bestimmten Bahn (6) der aus der Düse (5) austretenden Flüssigkeit und im Bezug auf die Symmetrieachse der Düse unsymmetrisch und nach unten zu geformt ist, die Tropfen der Flüssigkeit in ihrer Größe so eingestellt sind, daß sie den Luftwäscher nicht verlassen und sich ein Drallkörper (4) im Bereich des Lufteinlasses der Leitvorrichtung (2) befindet, der vorzugsweise entgegengesetzt dem Drall der Düse (5) gerichtet ist.

2. Luftwäscher nach Anspruch 1, **dadurch gekennzeichnet,** daß auslaßseitig ein Tropfenabscheider angeordnet ist.

3. Luftwäscher nach Anspruch 1 oder 2, **gekennzeichnet durch** eine in ein oder zwei Ebenen oder eine ringförmig die Düse umgebende Leitvorrichtung 2.

4. Luftwäscher nach einem der Ansprüche 1 bis 3, **gekennzeichnet durch** eine Trichterform der Leitvorrichtung 2 im Bereich des Lufteintrittes, so daß wenigstens ein Teil der einströmenden Luft in die Leitvorrichtung 2 geführt wird.

5. Luftwäscher nach einem der Ansprüche 1 bis 4, **dadurch gekennzeichnet,** daß ein Teil der einströmenden Luft an der Leitvorrichtung 2 vorbei und im Bereich ihres Luftaustrittes wieder zugeführt ist.

6. Luftwäscher nach einem der Ansprüche 1 bis 5, **dadurch gekennzeichnet,** daß die Düse 5 in oder entgegen der Strömungsrichtung der Luft sprüht.

7. Luftwäscher nach einem der Ansprüche 1 bis 6, **dadurch gekennzeichnet,** daß sich die leitvorrichtung 2 am düsenfernen Ende randseitig verjüngt.

8. Luftwäscher nach einem der Ansprüche 1 bis 7, **gekennzeichnet durch** Leitbleche 7 im Lufteinlaß der Leitvorrichtung 2.

9. Luftwäscher nach Anspruch 8, **gekennzeichnet durch** schwenkbare Lagerung der Leitbleche 7, welche den Lufteinlaß zu verschließen gestattet.

10. Luftwäscher nach einem der Ansprüche 1 bis 9, **dadurch gekennzeichnet,** daß mehrere Leitvorrichtungen 2 mit Düse 5 neben-und/oder übereinander über den Querschnitt des Gehäuses 1 verteilt sind.

11. Luftwäscher nach einem der Ansprüche 1 bis 10, **gekennzeichnet durch** schwenkbare Befestigung der Düse 5.

12. Luftwäscher zur Befeuchtung und Temperierung von Luft in Klimaanlagen odgl. nach einem der Ansprüche 1 bis 11, mit des Versprühen von Flüssigkeiten dienenden Düsen, **dadurch gekennzeichnet,** daß sich unterhalb der Düsen 5 eine Sammelwanne befindet, die mit der die Düse 5 beaufschlagenden Pumpe und mit einer Frischwasserleitung in Verbindung steht und ein Ventil, das beim Abschalten des Gerätes die Sammelwanne abläßt.

13. Luftwäscher nach Anspruch 12, **gekennzeichnet durch** einen nach innen führenden und von außen zugänglichen Dampfrohranschluß.

**Claims**

1. Air washer for moistening and tempering air in air-conditioning systems or similar in which nozzles (5) for spraying liquid are disposed in a housing (1) which is flowed through by the air to be treated, **wherein** at least one nozzle (5) is surrounded by a guiding device (2), which as an envelope is shaped in correspondence with the path (6) of the liquid leaving the nozzle, which is determined by the conical outlet, the airflow and gravity, and in relation to the axis of symmetry of said nozzle is shaped asymmetrically and downward, the drops of the liquid are adjusted in their size so that they do not leave the air washer and a swirl body (4) is disposed in the region of the air inlet of said guiding device (2), which preferably is in opposition to the swirl of said nozzle (5)

2. Air washer according to claim 1, **wherein** a drop separator is disposed on the outlet side.

3. Air washer according to claim 1 or 2, **wherein** said nozzle is surrounded by said guiding device 2 on one or two planes or in a ring-shape.

4. Air washer according to one of claims 1 to 3, **wherein** said guiding device 2 is shaped like a funnel in the region of the sir intake so that at least a part of the air flowing in is guided into said guiding device 2.

5. Air washer according to one of claims 1 to 4 **wherein** part of the air flowing in flows past said guiding device 2 and is re-supplied in the region of its air outlet.

6. Air washer according to one of claims 1 to 5 **wherein** said nozzle 5 sprays in or against the direction of flow of the air.

7. Air washer according to one of claims 1 to 6 **wherein** said guiding device 2 tapers at the edges at the end removed from the nozzle.

8. Air washer according to one of claims 1 to 7 **wherein** guide plates 7 are disposed in the air inlet of said guiding device 2.

9. Air washer according to claim 8 **wherein** said guide plates 7 are swivel mounted, which permits the closing of the air inlet.

10. Air washer according to one of claims 1 to 9 **wherein** a multiplicity of said guiding devices 2 with said nozzle 5 are distributed next to or above one another above the opening of said housing 1.

11. Air washer according to one of claims 1 to 10 **wherein** said nozzle 5 is swivel fastened.

12. Air washer for moistening and tempering air in air-conditioning systems or similar according to one of claims 1 to 11 having nozzles serving the spraying of liquids **wherein** beneath said nozzles 5 is disposed a collector, which is connected to the pump supplying said nozzle 5 and a fresh-water line, and there is a valve which discharges said collector when the machine is switched off.

13. Air washer according to claim 12 **wherein** a steam pipe connection is provided which leads inwards and is accessible from outside.

**Revendications**

1. Laveur d'air pour humidifier et tempérer l'air dans des climatiseurs d'air ou similaires, dans lequel des buses (5) de pulvérisation de liquide sont disposées dans une enceinte (1) que traverse l'air à traiter, **caractérisé en ce que** au moins une buse (5) est entourée d'un dispositif de guidage (2) en forme d'enveloppe fonction de la trajectoire (6) du liquide à sa sortie de la buse (5), laquelle est déterminée par le jet en forme de cône, le courant d'air et la gravité, et est dissymétrique par rapport à l'axe de symétrie de la buse et orientée vers le bas, la taille des gouttelettes de liquide étant telle, qu'elles ne quittent pas le laveur d'air, et un générateur de turbulence (4) se trouvant du côté de l'entrée d'air du dispositif de guidage (2), agissant de préférence dans le sens opposé au tourbillon de la buse (5).

2. Laveur d'air selon la revendication 1, **caractérisé en ce que** un séparateur de gouttes est disposé à sa sortie.

3. Laveur d'air selon la revendication 1 ou 2, **caractérisé par** un dispositif de guidage (2) entourant la buse selon un ou deux plans ou l'entourant de façon annulaire.

4. Laveur d'air selon l'une des revendications 1 à 3, **caractérisé par** une forme en entonnoir du dispositif de guidage (2) dans la zone de l'entrée d'air, de telle sorte qu'au moins une partie de l'air incident est conduit vers le dispositif de guidage (2).

5. Laveur d'air selon l'une des revendications 1 à 4, **caractérisé en ce que** une partie de l'air incident contourne le dispositif de guidage (2) et est réinjectée du côté de sa sortie d'air.

6. Laveur d'air selon l'une des revendications 1 à 5, **caractérisé en ce que** la buse (5) pulvérise dans le sens ou en sens contraire de la direction d'écoulement d'air.

7. Laveur d'air selon l'une des revendications 1 à 6, **caractérisé en ce que** les bords du dispositif de guidage (2) à son extrémité opposée à la buse sont resserrés vers l'intérieur.

8. Laveur d'air selon l'une des revendications 1 à 7, **caractérisé par** des tôles de guidage (7) à l'entrée d'air du dispositif de guidage (2).

9. Laveur d'air selon la revendication 8, **caractérisé par** un montage pivotant des tôles de guidage (7), qui permet d'obturer l'entrée d'air.

10. Laveur d'air selon l'une des revendications 1 à 9, **caractérisé en ce que** plusieurs dispositifs de guidage (2) avec buses (5) sont répartis les uns à côté et/ou au dessus des autres sur la section de l'enceinte (1).

11. Laveur d'air selon l'une des revendications 1 à 10, **caractérisé par** un montage pivotant de la buse (5).

12. Laveur d'air pour humidifier et tempérer l'air dans des climatiseurs d'air ou similaires selon l'une des revendications 1 à 11, avec les buses de pulvérisation de liquides, **caractérisé en ce que** un bac de récupération est disposé sous les buses (5), et est connecté à la pompe d'alimentation des buses (5) et à la canalisation d'alimentation en eau froide, avec une soupape qui, lorsque le dispositif est arrêté, vide le bac de récupération.

13. Laveur d'air selon la revendication 13, **caractérisé par** la connexion d'un tube de vapeur pénétrant à l'intérieur et accessible de l'extérieur.

FIG 1

FIG. 2